# FASCICULE DE BREVET EUROPEEN

(11) **EP 3 093 557 B1**
(45) Date de publication et mention de la délivrance du brevet: **25.08.2021**
(21) Numéro de dépôt: 16168233.1
(22) Date de dépôt: 04.05.2016
(51) Int. Cl.: F21S 41/27, F21S 41/26, F21S 41/663

(54) **MODULE D'ÉCLAIRAGE BIFONCTION CODE-ROUTE POUR VÉHICULE AUTOMOBILE**
BELEUCHTUNGSMODUL MIT DOPPELFUNKTION FÜR ABBLEND- UND FERNLICHT FÜR KRAFTFAHRZEUG
LOW & HIGH BEAM BI-FUNCTIONAL LIGHTING MODULE FOR MOTOR VEHICLE

(30) Priorité: 13.05.2015 FR 1554308
(43) Date de publication de la demande: 16.11.2016
(73) Titulaire: VALEO VISION, 93012 Bobigny Cedex (FR)
(72) Inventeur: MEYRENAUD, Jean-Luc, 93190 LIVRY GARGAN (FR); RACINE, Paul, 25000 BESANCON (FR); THABET, Ziyed, 7700 Mouscron (BE)

(56) Documents cités:
- EP-A1- 2 752 615
- EP-A2- 1 213 178
- EP-A2- 1 418 621
- EP-A2- 2 719 940
- FR-A1- 2 853 395
- None

## Description

La présente invention concerne un module d'éclairage notamment pour véhicule automobile. Le module d'éclairage est bifonction, c'est-à-dire qu'il comprend une première fonction d'éclairage de type code et, en outre, une seconde fonction d'éclairage de type route, complétant la fonction code.

Les projecteurs de voitures sont souvent pourvus de différents modules, chaque module étant dédié à générer différents types d'éclairage : feux de route, feux de croisement (aussi appelé code), feux antibrouillards, etc. Afin de limiter l'encombrement résultant de l'agencement de différents modules au sein d'un même projecteur, et par la même occasion afin de réduire les coûts associés, il est souhaitable de combiner différents modules et/ou de réduire la taille des modules au sein d'un même projecteur.

En particulier, le document US2011/0008753A1 décrit un dispositif permettant de combiner les fonctionnalités relatives aux feux antibrouillards et aux feux de croisement. Pour ce faire, le document propose l'utilisation de deux éléments semi-conducteur émettant de la lumière, chaque élément pouvant être sélectivement contrôlé afin de générer le type de feux requis par le conducteur. Ce type de module permet la compatibilité entre les feux antibrouillards et les feux de croisement au sein d'un module unique. Cependant, il ne permet pas de fournir les deux fonctions feux de croisement et feux de route. Chacun des documents EP2752615 A1, US2012140508 A1, US2013322105 A1 décrit un module d'éclairage pour véhicule automobile.

Un objet de la présente invention est d'intégrer une fonction d'éclairage supplémentaire à un module destiné à générer un faisceau code. De manière préférentielle, la présente invention a pour objet d'ajouter la fonction d'éclairage faisant le faisceau route au module faisceau code sans devoir augmenter ses dimensions ni ajouter d'autres éléments mécaniques.

L'invention propose un module d'éclairage, notamment pour véhicule automobile, comprenant un élément optique destiné à produire au moins un premier faisceau présentant une coupure au moins en partie oblique, et au moins une première source lumineuse, le module étant caractérisé en ce que l'élément optique comporte au moins une portion optique présentant un axe optique et un foyer, la première source lumineuse étant disposée au foyer et apte à émettre des premiers rayons lumineux vers l'élément optique pour produire le premier faisceau, le module comporte en outre une deuxième source lumineuse, la deuxième source lumineuse étant disposée à distance du foyer et décalée vers le bas par rapport à la première source lumineuse selon un axe vertical, la deuxième source lumineuse étant apte à émettre des deuxièmes rayons lumineux vers l'élément optique pour produire un deuxième faisceau éclairant au moins partiellement au-dessus de la coupure.

On entend par partie de coupure oblique une partie de coupure oblique vis-à-vis du reste de la coupure. Selon l'invention, le premier faisceau présente une coupure de type coupure d'un éclairage de croisement. Le premier faisceau est destiné à faire partie d'un faisceau de type croisement

Avantageusement, l'élément optique est agencé pour projeter, à partir des premiers rayons lumineux, une pluralité d'images de la première source de sorte à ce que les bords supérieurs de ces images soient alignés et/ou superposés pour former ladite partie oblique de la coupure du premier faisceau.

Selon l'invention, la deuxième source lumineuse est décalée verticalement par rapport au foyer d'une distance telle qu'une pluralité d'images de la deuxième source, formées par la projection des deuxièmes rayons lumineux par l'élément optique, soient disposées au moins partiellement au dessus de la coupure du premier faisceau. Le cas échéant, le deuxième faisceau peut présenter une distribution lumineuse de type faisceau de route complémentaire.

De manière préférentielle, la seconde source lumineuse est décalée par rapport à la première source lumineuse selon un axe transversal de sorte que les faisceaux lumineux se concentrent au niveau de l'axe optique pour y former une tache lumineuse dont les caractéristiques sont celles d'un faisceau de route. Par exemple, la deuxième source lumineuse est décalée transversalement par rapport au foyer d'une distance telle qu'une pluralité d'images de la deuxième source, formées par la projection des deuxièmes rayons lumineux par l'élément optique, soient concentrées au niveau de l'axe optique. Selon l'invention, la première source lumineuse présente une zone d'émission de lumière comprenant un bord, ce bord étant disposé au foyer de la portion optique de l'élément optique. Selon l'invention, la première source lumineuse peut être orientée vis-à-vis de l'élément optique de sorte à ce que ledit bord soit un bord oblique. Par exemple, le bord oblique s'étend vis-à-vis d'un axe transversal de l'élément optique.

Avantageusement, la deuxième source lumineuse est orientée vis-à-vis de l'élément optique de façon identique à l'orientation de la première source lumineuse vis-à-vis de l'élément optique.

Préférentiellement, un faisceau de type croisement comportant le premier faisceau est généré lorsque la première source lumineuse est allumée, la seconde source lumineuse étant éteinte.

Avantageusement, un faisceau de type route comportant une superposition et/ou une juxtaposition des premier et deuxième faisceaux est généré lorsque les première et seconde sources lumineuses sont allumées.

Eventuellement, un faisceau de type diurne est généré, lorsque la deuxième source lumineuse est allumée tout en étant alimentée à l'aide d'une puissance électrique inférieure à celle nécessaire pour générer le deuxième faisceau, la première source lumineuse étant éteinte.

De manière préférentielle, la distance entre les deux sources lumineuses est inférieure ou égale à une fraction de la distance focale de la portion optique. Par exemple, si f désigne ladite distance focale, la distance entre les deux sources lumineuses peut être inférieure ou égale à f*tan(0.57°), soit environ f/100.

Avantageusement, les première et seconde sources lumineuses sont constituées chacune d'une puce semi-conductrice émettrice de lumière activable sélectivement. Par exemple, les première et seconde sources sont formées par une même diode électroluminescente de type bipuce.

En variante, les première et seconde sources lumineuses sont formées par une matrice de diodes comportant au moins deux diodes formant chacune l'une des sources lumineuses. Selon l'invention, la portion optique est une lentille.

Avantageusement, le matériau de la portion optique comporte du silicone, du verre, du polycarbonate ou du PMMA. Selon l'invention, le premier faisceau est destiné à faire partie d'un faisceau de type croisement. L'élément optique comporte au moins une seconde portion optique présentant un axe optique, un foyer et une troisième source lumineuse disposée au voisinage du foyer de la seconde portion optique pour produire au moins un deuxième faisceau faisant partie dudit faisceau de type croisement.

L'invention sera mieux comprise à la lumière de la description suivante qui n'est donnée qu'à titre indicatif et qui n'a pas pour but de la limiter, accompagnée des dessins joints parmi lesquels :
- La figure 1 est une vue en éclaté d'un module lumineux selon l'invention,
- La figure 2 est une vue de dessus d'un élément optique selon l'invention,
- La figure 3A est une vue analogue à la figure 2, illustrant un exemple de trajectoire de faisceaux lumineux issus d'une première diode d'un module lumineux selon l'invention,
- La figure 3B est un diagramme isolux du faisceau lumineux produit par la première diode de la figure 3A,
- La figure 4A est une vue analogue à la figure 2, illustrant un exemple de trajectoire de faisceaux lumineux issus d'une deuxième diode d'un module lumineux selon l'invention,
- La figure 4B est un diagramme isolux du faisceau lumineux produit par la deuxième diode de la figure 4A,
- La figure 5A est une vue analogue à la figure 2, illustrant un exemple de trajectoire de faisceaux lumineux issus d'une troisième diode d'un module lumineux selon l'invention
- La figure 5B est un diagramme isolux du faisceau lumineux produit par la troisième diode de la figure 5A,
- La figure 6A est une vue analogue à la figure 2, illustrant un exemple de trajectoire de faisceaux lumineux issus d'une quatrième diode d'un module lumineux selon l'invention
- La figure 6B est un diagramme isolux du faisceau lumineux produit par la quatrième diode de la figure 6A,
- La figure 7A est une vue analogue à la figure 2 illustrant un exemple de trajectoire de faisceaux lumineux issus d'une quatrième diode d'un module lumineux selon l'invention,
- La figure 7B est un diagramme isolux du faisceau lumineux produit par la cinquième diode de la figure 7A,
- La figure 8 est un schéma illustrant le déplacement entre les deux sources lumineuses,
- La figure 9 est un schéma illustrant le déplacement des images de la première à la seconde position,
- La figure 10 est une vue de derrière de la portion optique illustrant les deux sources lumineuses,
- La figure 11 est un diagramme isolux généré par les 5 LED de l'élément optique, en mode faisceau code,
- La figure 12 est un diagramme isolux généré par les 5 LED de l'élément optique, en mode faisceau route,
- La figure 13 est un diagramme isolux généré par les 6 LED de l'élément optique, combinant les faisceaux code et route,

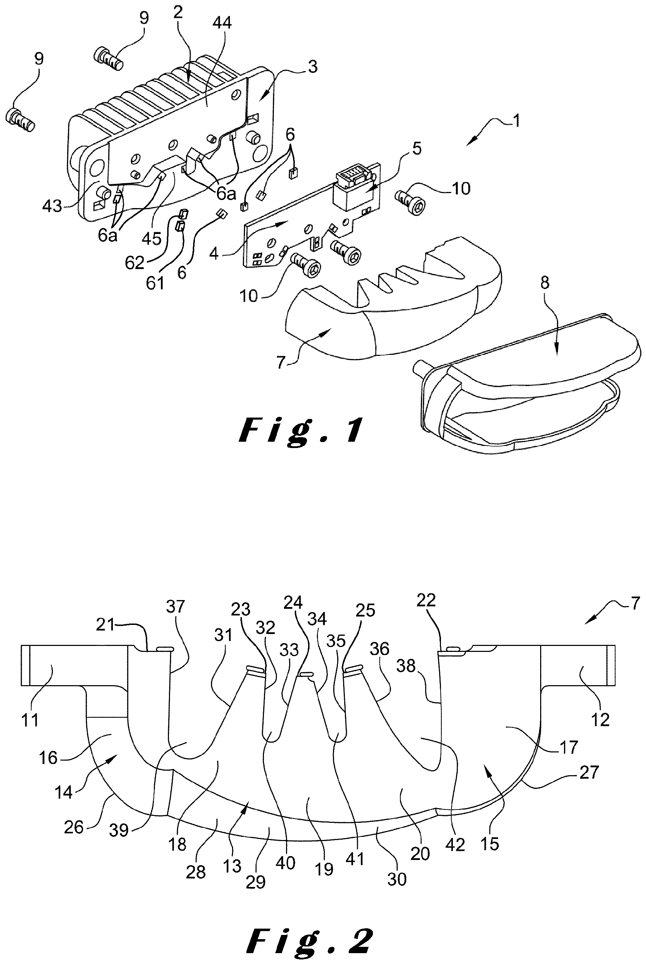

En se référant à la figure 1, un module lumineux 1 selon l'invention comprend un dissipateur thermique 2 relié à un substrat 3, une carte électronique 4, du type carte de circuit imprimé, dotée d'un connecteur 5 électrique, six diodes électroluminescentes 6, 61, 62 (quatre d'entre elles portant la même référence 6) qui seront dénommées LED (pour *Light Emitting Diode* en anglais) pour la suite de la description, un élément optique 7 en matériau transparent selon l'invention et un boitier 8 de protection et de maintien, apte à venir enserrer l'élément optique 7. Le boitier 8 est par exemple fixé au substrat 3 au moyen d'une première série de vis 9. La carte électronique 4 est par exemple ancrée dans le substrat 3 au moyen d'une deuxième série de vis 10. Le substrat 3 comprend en outre six emplacements 6a destinés à positionner les diodes 6. Un tel module 1 est destiné à venir se fixer, par exemple, à l'intérieur d'un projecteur de véhicule.

En se référant à la figure 2, l'élément optique 7 en matériau transparent selon l'invention est plein et est réalisé par exemple en PC (polycarbonate), et joue le rôle d'une lentille optique.

Cet élément optique comporte schématiquement deux pattes latérales 11, 12 et un corps central 13 situé entre les pattes 11, 12. Le corps 13 est bordé par deux bras 14, 15 d'extrémité, reliés chacun à une patte 11, 12, chacun des bras 14, 15 s'étendant selon une direction qui est perpendiculaire à celle de la patte 11, 12 à laquelle il est raccordé. Les deux pattes 11, 12 sont rigoureusement alignées, si bien que l'élément optique 7 peut venir en appui contre une surface plane, par l'intermédiaire de ses pattes 11, 12.

Avantageusement, le corps 13 de cet élément optique 7 est divisé en cinq portions élémentaires 16, 17, 18, 19, 20 pleines, caractérisée chacune et respectivement par une surface d'entrée 21, 22, 23, 24, 25 et par une surface de sortie 26, 27, 28, 29, 30. Cet élément optique 7 dispose ainsi de deux portions élémentaires 16, 17 d'extrémité, formant les deux bras 14, 15 d'extrémité, et de trois portions élémentaires intermédiaires 18, 19, 20 positionnées entre les portions 16, 17 d'extrémité. Les cinq surfaces de sortie 26, 27, 28, 29, 30 sont jointives, pour former une surface de sortie globale de l'élément optique 7, qui est continue. Les cinq surfaces d'entrée 21, 22, 23, 24, 25 sont séparées les unes des autres, et sont sensiblement alignées avec les deux pattes 11, 12. Chaque portion 16, 17, 18, 19, 20 est allongée, la surface d'entrée 21, 22, 23, 24, 25 et la surface de sortie 26, 27, 28, 29, 30 constituant les deux extrémités de chacune des portions 16, 17, 18, 19, 20 le long de leur axe longitudinal. Les trois portions élémentaires intermédiaires 18, 19, 20 possèdent chacune deux parois 31, 32, 33, 34, 35, 36 prenant naissance au niveau de la surface d'entrée 23, 24, 25 et s'étendant vers deux bords délimitant la surface de sortie 28, 29, 30 de la même portion 18, 19, 20. Ces parois 31, 32, 33, 34, 35, 36, qui peuvent par exemple être aluminées, sont destinées à empêcher les faisceaux produits par une source lumineuse placée au niveau d'une surface d'entrée 23, 24, 25 d'une portion 18, 19, 20, de passer à travers la surface de sortie d'une portion adjacente. Les deux portions 16, 17 élémentaires d'extrémité ne possèdent qu'une seule paroi 37, 38 destinée à empêcher une source lumineuse placée au niveau de la surface d'entrée 21, 22, de l'une d'elles, d'irradier une surface de sortie d'une portion élémentaire adjacente, puisque chacune des portions d'extrémité 16, 17 ne possède qu'une seule portion élémentaire adjacente. Les parois 31, 32, 33, 34, 35, 36, 37, 38 de deux portions élémentaires 16, 17, 18, 19, 20 adjacentes se rejoignent au moyen d'un segment de paroi courbe. L'élément optique 7 présente ainsi une série de quatre creux 39, 40, 41, 42 alignés en alternance avec les cinq portions élémentaires 16, 17, 18, 19, 20, chaque creux étant ainsi délimité par une paroi d'une portion élémentaire et par une paroi d'une portion élémentaire adjacente. Les deux surfaces d'entrée 21, 22 des deux portions élémentaires 16, 17 d'extrémité sont situées en retrait des surfaces d'entrée 23, 24, 25 des trois portions élémentaires intermédiaires 18, 19, 20. Pour chacune des cinq portions élémentaires 16, 17, 18, 19, 20, la distance moyenne séparant la surface d'entrée et la surface de sortie est sensiblement constante. Les surfaces d'entrée 21, 22, 23, 24, 25 sont planes et les surfaces de sortie 26, 27, 28, 29, 30 sont de forme arrondie.

De préférence, chaque surface de sortie (26, 27, 28, 29, 30) d'une portion (16, 17, 18, 19, 20) admet un foyer qui se situe sensiblement au niveau de la surface d'entrée (21, 22, 23, 24, 25) correspondante. La forme de chaque surface de sortie est sensiblement celle d'une portion d'ellipsoïde.

Le fait que le foyer de chaque surface de sortie se trouve au niveau de la surface d'entrée de la même portion, signifie qu'il existe un point ou un segment horizontal au voisinage de la surface d'entrée tel qu'une majorité des rayons issus de ce point ou des points de la ligne ressortent de la surface de sortie en étant parallèle à un même plan.

En se référant à la figure 1, le radiateur 2 et le substrat 3 constituent un élément monobloc de préférence en métal. Le substrat 3 est assimilable à une plaque de faible épaisseur possédant une face 43 d'implantation dotée d'un évidement 44 dont le contour est analogue à celui de la carte 4 électronique, l'évidement 44 étant destiné à recevoir la carte 4. Cette face 43 présente une protubérance 45 centrale bordant partiellement l'évidement 44 et contribuant à agrandir partiellement le bord cernant l'évidement 44.

En se référant à la figure 1, les six LED 6, 61, 62 sont solidarisées à la face 43 du substrat 3, qui est dotée de l'évidement 44, au niveau d'une zone extérieure à l'évidement 44.

Plus précisément, en se référant à la figure 1, les six LED 6, 61, 62 sont disposées le long du bord délimitant l'évidement 44, trois LED 6 étant placées sur la protubérance 45 et les trois autres LED 6, 61, 62 étant placées au niveau de la face 43 du substrat 3 située à une altitude moins élevée que celle de la protubérance 45. De cette manière, trois LED 6, 61, 62 d'extrémité encadrent trois LED 6 intermédiaires, surélevées. Chaque LED 6, 61, 62 présente un élément photoémissif de forme sensiblement carrée et ayant une faible épaisseur.

Les six LED 6, 61, 62 sont tournées différemment par rapport à la direction vers l'avant, soit la direction d'émission du module. En d'autres termes, en vue de face, ces LED présentent des orientations différentes. Par exemple en projection sur un plan de projection situé devant les LED et perpendiculaire à l'axe optique d'émission du module lumineux, ces LED présentent des orientations différentes au sein du plan de projection. Ainsi, deux LED peuvent être agencées de manière à ce que les bords de leurs éléments photoémissifs présentent, en vue de face, une orientation différente. Les bords obliques s'étendent vis-à-vis d'un axe transversal de l'élément optique. Ces bords peuvent, en vue de face, faire entre eux un angle de 45°. Ces six LED 6, 61, 62 sont disposées pour émettre un faisceau lumineux dans la même direction.

Comme illustré sur la figure 1, l'élément optique 7 selon l'invention vient se fixer sur le substrat 3 de manière à ce que chacune des six LED 6, 61, 62, solidarisées au substrat 3, vienne se positionner respectivement au niveau d'une surface d'entrée 21, 22, 23, 24, 25 de l'élément optique 7, illustrée sur la figure 2, à l'exception de la face d'entrée 21 qui est en vis-à-vis de deux LED 6, de sorte que chaque LED peut envoyer un faisceau lumineux vers la surface d'entrée 21, 22, 23, 24, 25 à laquelle elle est associée, les faisceaux traversant la surface d'entrée 21, 22, 23, 24, 25 pour ensuite passer par la surface de sortie 26, 27, 28, 29, 30 de la même portion. Ainsi, les faisceaux lumineux issus de chaque surface d'entrée 21, 22, 23, 24, 25 peuvent, soit directement parvenir à la surface de sortie 26, 27, 28, 29, 30 correspondante, soit être préalablement réfléchis sur les parois 31, 32, 33, 34, 35, 36, 37, 38 avant d'arriver sur la surface de sortie. Les parois 31, 32, 33, 34, 35, 36, 37, 38 évitent que les faisceaux lumineux émis par une LED placée au niveau d'une portion élémentaire 16, 17, 18, 19, 20, ne parviennent jusqu'à la surface de sortie 26, 27, 28, 29, 30 d'une portion élémentaire adjacente. Les portions élémentaires 16, 17, 18, 19, 20 agissent de façon séparées et autonomes, dans le but d'obtenir un faisceau lumineux résultant, sans interférences parasites.

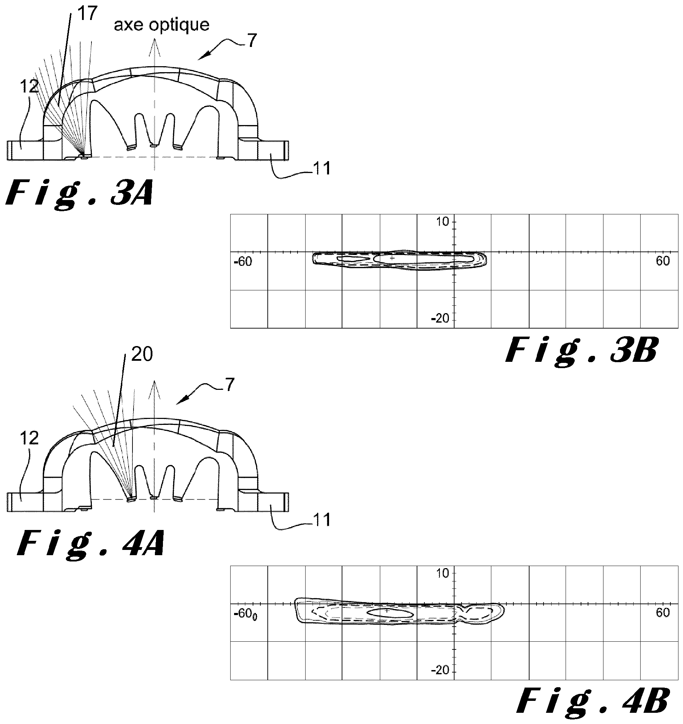

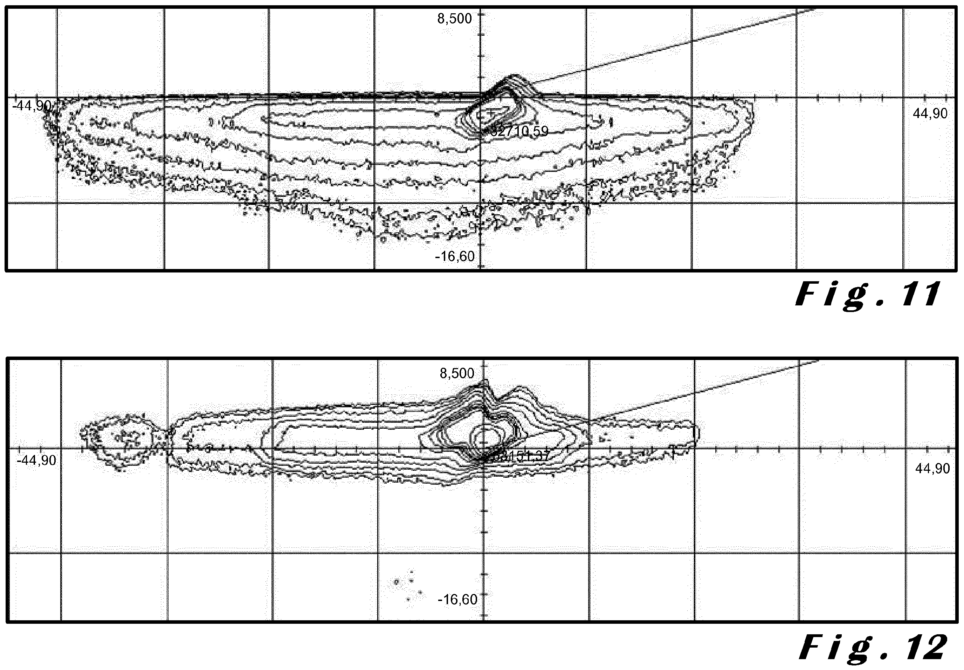

Les figures 3A à 7B illustrent un exemple d'utilisation d'un module lumineux 1 selon l'invention, en décomposant le faisceau lumineux résultant, en plusieurs composantes issues chacune d'une portion élémentaire 16, 17, 18, 19, 20, du module 1 associée à la LED correspondante. La portion élémentaire 16 comprend deux sources lumineuses 61, 62 : une première LED 61 produit au moins un premier faisceau, ce premier faisceau étant une composante d'un faisceau code, une seconde LED 62 produit au moins un deuxième faisceau, ce deuxième faisceau étant une composante d'un faisceau route. Le faisceau lumineux provenant de la seconde LED de la portion élémentaire 16 est illustré sur les figures 11 à 13.

Un faisceau code comporte généralement une coupure oblique. Selon l'invention, le premier faisceau génère au moins une partie de la coupure oblique du faisceau code, ladite partie de la coupure étant définie par une partie de la coupure oblique de la coupure du faisceau code.

De cette manière, en se référant aux figures 3A et 3B, la portion élémentaire d'extrémité 17 située à gauche du module 1 et associée à la LED 6 d'extrémité correspondante, peut servir à produire un éclairage vers la gauche se focalisant sur la portée. Cet éclairage est plutôt concentré et intense.

En se référant aux figures 4A et 4B, la portion élémentaire 20 intermédiaire gauche, associée à la LED 6 correspondante, peut servir à produire un éclairage étendu horizontalement vers la gauche. Cet éclairage est plutôt peu intense et étalé transversalement par rapport au véhicule.

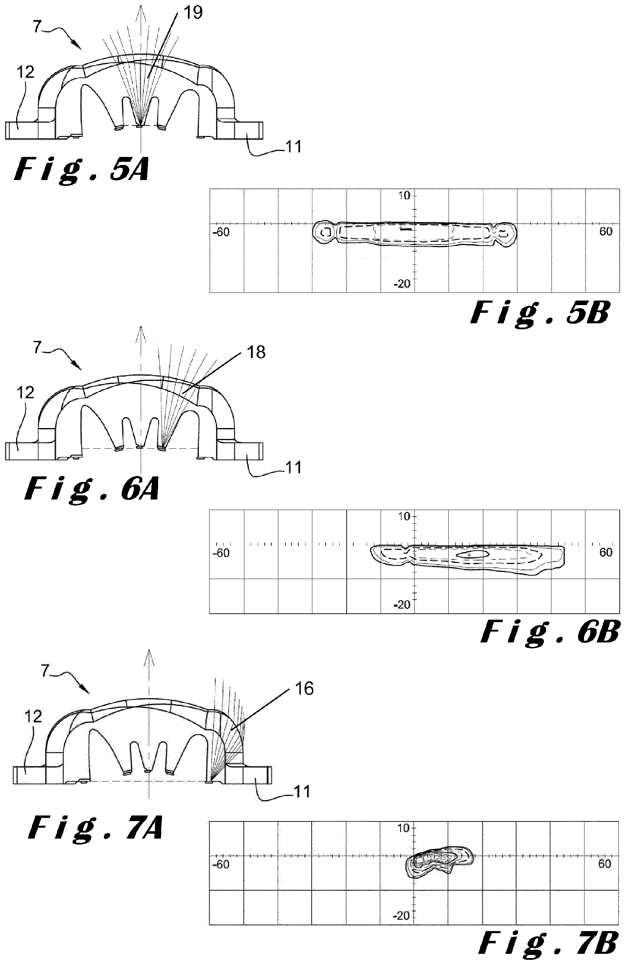

En se référant aux figures 5A et 5B, la portion élémentaire 19 intermédiaire centrale, associée à la LED 6 correspondante, peut servir à produire un éclairage étendu horizontalement autant vers la droite que vers la gauche. Cet éclairage est plutôt peu intense et étalé transversalement par rapport au véhicule.

En se référant aux figures 6A et 6B, la portion élémentaire 18 intermédiaire droite, associée à la LED 6 correspondante, peut servir à produire un éclairage étendu horizontalement vers la droite. Cet éclairage est plutôt peu intense et étalé transversalement par rapport au véhicule.

En se référant aux figures 7A et 7B, la portion élémentaire d'extrémité 16 située à droite du module 1 est associée à deux LED 61 et 62 (illustrées sur la figure 1) d'extrémité correspondante. De préférence, la première LED 61 produit un éclairage gauche de portée, incliné d'un angle de 45° par rapport à un axe horizontal. Cet éclairage est plutôt concentré et intense et est illustré sur le diagramme isolux de la figure 7B. L'éclairage produit par la seconde LED 62 est illustré sur les figures 11 à 13. Les éclairages produits par les portions 16, 17, 18, 19 et 20 sont étendus horizontalement. Ils sont dédiés à illuminer la route face au conducteur. Ces derniers peuvent notamment être utilisés pour générer une partie de l'éclairage requis par des feux de croisement d'un véhicule. Les différentes distributions d'éclairage illustrées sur les figures 3B à 7B montrent que ces composantes comportent une coupure horizontale, c'est à dire qu'il n'y a pas d'éclairage au-delà de la ligne indiquant l'horizontale sur les diagrammes isolux du faisceau lumineux.

La seconde source lumineuse 62 de la portion 16 est apte à générer un feu de route. La position de la seconde source est déterminée de manière à ce que lorsque la source se trouve dans cette position, elle génère un éclairage correspondant à un feu de route.

Les feux de route ne comportent pas de coupure. L'intensité des feux de route est concentrée et intense le long de l'axe optique. Ils éclairent au moins partiellement au-delà de la coupure horizontale des feux de croisement. L'intensité requise par la réglementation peut être de l'ordre de 40500 candela. L'éclairage produit par les feux de croisement offre une bonne visibilité sans éblouir les autres usagers de la route et comportent généralement une coupure horizontale et une coupure oblique afin d'illuminer les panneaux situés sur le bord de la route, ainsi que les trottoirs ou les bas-côtés. L'intensité des feux de croisement est de l'ordre de 36000 candela.

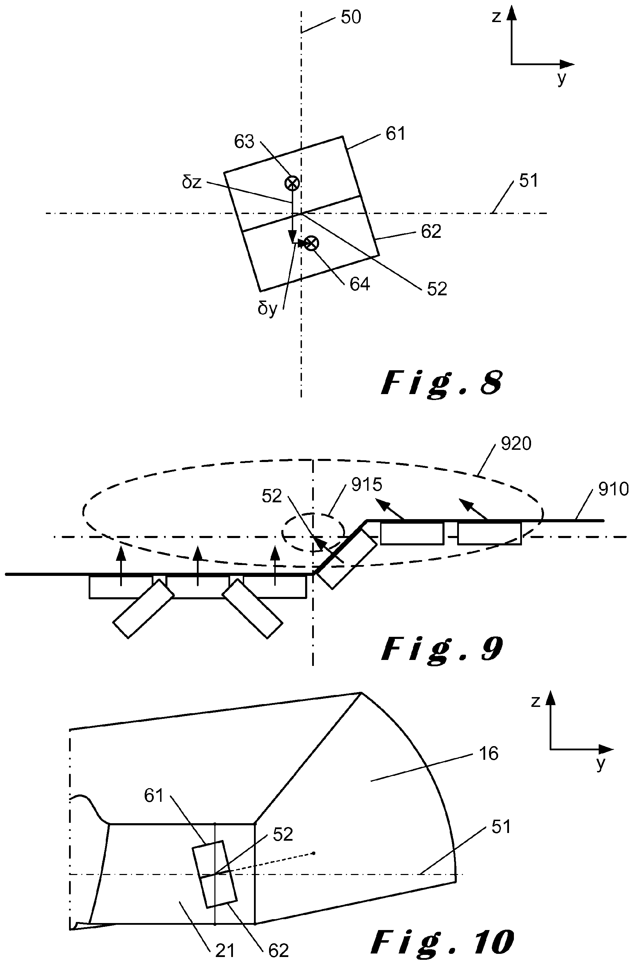

La figure 8 illustre le vecteur déplacement entre les positions des deux sources. Les deux sources sont indiquées par les références 61 et 62. Le vecteur déplacement comprend une composante verticale selon l'axe z (-8z) et une composante latérale selon l'axe y (8y), les axes y et z étant illustrés sur la figure. L'intersection 52 entre l'axe vertical 50 et l'axe horizontal 51 est la trace de l'axe optique de la portion 16. Le terme vertical s'entend lorsque le module d'éclairage est disposé dans des conditions normales d'utilisation.

La figure 9 illustre de manière schématique la différence dans la disposition des images entre celles produites par la première source et celles produites par la seconde source optique respectivement.

Préférentiellement, le centre 63 de la première LED 61 se trouve légèrement au-dessus de l'axe optique. Le bord de la LED est incliné à 45° et intersecte l'axe optique. En effet, c'est le bord de la LED qui produit la coupure. Les images produites par la première source sont illustrées sur la figure 9. Les images sont toutes situées en-dessous de la coupure 910. Préférentiellement, les images sont alignées et/ou superposées pour former ladite partie oblique de la coupure du premier faisceau. Il est requis par la législation que les feux de route émettent vers l'avant sur une distance minimale de 100 mètres. L'éclairage produit par des feux de route doit dès lors être concentré et intense le long de l'axe optique.

Pour faire remonter les images produites par la première LED 61, le vecteur déplacement doit comporter une composante verticale orientée vers le bas, -δz, de telle sorte que la seconde position soit située sous l'axe optique, comme illustré sur la figure 8. La deuxième source lumineuse 62 est décalée verticalement par rapport au foyer d'une distance telle qu'une pluralité d'images de la deuxième source 62, formées par la projection des deuxièmes rayons lumineux par l'élément optique, soient disposées au moins partiellement au-dessus de la coupure du premier faisceau. Le deuxième faisceau présente une distribution lumineuse de type faisceau de route complémentaire. La figure 9 illustre le déplacement des images. Les images qui étaient sous la coupure du faisceau code pour la première source sont déplacées au-dessus de la coupure et contribuent au volume 920 (largeur et épaisseur) du faisceau route.

D'autre part, la seconde LED 62 est également décalée latéralement par rapport à la première position de sorte que les images obliques formant la coupure à 15 degrés pour la première LED 61 se superposent aux images horizontales et verticales provenant du décalage -8z selon l'axe vertical z. Ce décalage δy est illustré sur la figure 8. La seconde LED 62 est décalée transversalement par rapport au foyer d'une distance telle qu'une pluralité d'images de la seconde LED 62, formées par la projection des deuxièmes rayons lumineux par l'élément optique, soient concentrées au niveau de l'axe optique. Le recouvrement des images contribue à la concentration du faisceau route le long de l'axe optique de la portion 16. Cette concentration du faisceau est illustrée par l'ellipse centrale 915 de la figure 9. Ces deux positions des LED 61 et 62 sur la figure 8 sont situées au voisinage du foyer de la surface extérieure 26, qui est situé sur l'axe optique. Le centre de la première source (61) est sensiblement décalé vers le haut et vers la gauche du foyer et le centre de la seconde source (62) est sensiblement décalé vers le bas et vers la droite du foyer. Le fait que les deux sources sont proches l'une de l'autre assure que le module optique est compact et qu'il y a une continuité dans l'éclairage généré par les deux faisceaux. La gauche et la droite sont définies par rapport à l'axe optique, qui est orienté selon la direction de propagation de la lumière.

Différents modes de réalisation sont décrits pour coupler les deux types de feux dans un module optique unique ou dans une portion de module optique.

Dans un mode de réalisation préférentiel, la portion optique 16 de l'élément optique 7 admet une source optique dans chacune des deux positions. Dès lors, afin de produire un faisceau de croisement, la première source lumineuse 61 est allumée et la seconde source lumineuse 62 est éteinte. Afin de produire exclusivement un faisceau de type route, la première source lumineuse est éteinte et la seconde source lumineuse est allumée. Il est également possible de combiner les deux types de faisceaux en allumant les deux sources de manière à produire un faisceau de type route plus intense.

Avantageusement, la distance entre les deux LED dépend des dimensions de la lentille et de ses caractéristiques optiques. Cependant, plus la taille de la lentille est faible, plus les positions des sources lumineuses doivent être précises.

De manière préférentielle, les dimensions de l'élément optique 7 est de l'ordre de 20 mm dans le sens de la hauteur et de l'ordre de 110 mm dans le sens de la largeur. Pour un élément optique ayant une taille de cet ordre de grandeur, la distance entre les deux sources optiques destinées à générer les faisceaux de type route et croisement dans une portion optique identique, est de préférence comprise entre 2 et 5 mm, préférentiellement entre 3 et 4 mm. Cette distance est avantageusement inférieure à une fraction de la distance focale de la portion optique. Cette fraction est préférentiellement de l'ordre de f*tan(0.57°), soit f/100 si f est la focale de la portion optique. Cette distance est plus aisément réalisable au moyen d'une matrice de diodes adressables comprenant au moins deux surfaces photoémettrices. Les matrices de diode présentent l'avantage d'avoir des surfaces photoémettrices proches que l'on peut allumer séparément. D'autre part, les surfaces émissives sont plus petites que pour des LED indépendantes. Il y a également un intérêt à ce que les surfaces photoémettrices soient adjacentes pour que l'intensité maximale du faisceau route ne soit pas située trop haut. Il en résulte que lorsque les deux sources sont adjacentes, l'éclairage généré par les deux sources est réparti de manière uniforme.

La figure 10 illustre la surface d'entrée 21 de la portion élémentaire 16. Elle comporte les deux LED 61, 62 destinées à générer un éclairage comportant la coupure oblique d'un feu de croisement et un feu de route respectivement. Seules les surfaces émissives des LED ont été représentées, et non leurs surfaces de connexion. Chacune des positions de ces LED est définie au-dessus et en-dessous de l'axe optique de la portion élémentaire 16. C'est la position de la source par rapport à l'axe optique qui détermine la direction de propagation des rayons. La première LED produit un éclairage dont l'intensité se trouve sous une coupure horizontale et oblique. La seconde LED produit un feu de route dont le faisceau est relevé et plus concentré par rapport au faisceau du feu de croisement. Sur la figure 10, les deux surfaces photoémettrices sont adjacentes, comme dans une matrice de diodes adressables.

La figure 11 est un diagramme isolux de la portion 16 de l'élément optique 7. Seule la LED dédiée au feu de croisement est allumée. La coupure horizontale et la coupure oblique à 15 degrés, qui sont des caractéristiques des feux de croisement, sont visibles.

La figure 12 illustre un diagramme isolux semblable à celui de la figure 10, cependant seule la LED 62 dédiée au feu de route est allumée. Comme évoqué dans le cadre du schéma de la figure 9, la distribution de l'éclairage est déplacée vers le haut, et l'intensité lumineuse est concentrée dans un voisinage du centre du diagramme correspondant à l'axe optique.

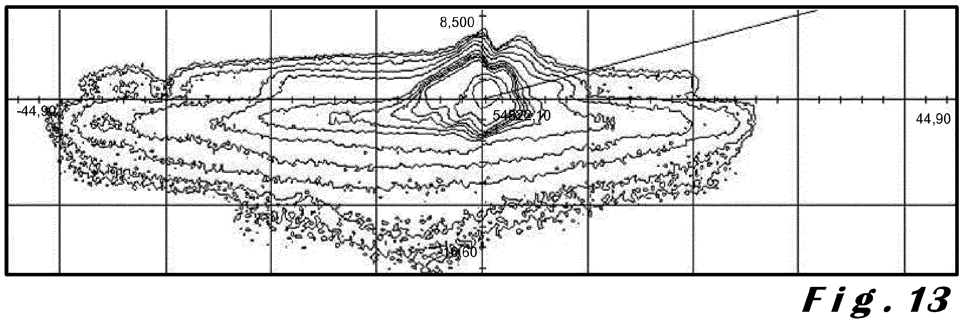

La figure 13 illustre un troisième diagramme isolux relatif à l'élément optique 7 dans lequel les LED dédiées au feu de croisement et au feu de route sont allumées. Il en résulte une distribution de l'éclairage au-dessus et en-dessous de la coupure horizontale avec une concentration de l'intensité lumineuse dans le voisinage du centre du diagramme.

Comme le montrent clairement les figures 3A, 4A, 5A, 6A, 7A, les faisceaux lumineux produits par chaque LED 6, 61, 62 du module lumineux 1, ne traversent que la portion élémentaire 16, 17, 18, 19, 20 à laquelle la ou les LED sont associées, sans pouvoir se diriger vers la surface de sortie 26, 27, 28, 29, 30 d'une portion élémentaire adjacente 16, 17, 18, 19, 20. Il en découle qu'un module lumineux 1 selon l'invention, est apte à produire un faisceau lumineux résultant, qui est net et précis, car dépourvu de tous faisceaux lumineux parasites dus à des interférences lumineuses entre les différentes portions élémentaires 16, 17, 18, 19, 20 du module 1.

Bien que les LED 6, 61 et 62 soient illustrées de manière identique sur les figures, elles peuvent naturellement avoir des caractéristiques structurelles, géométriques et lumineuses différentes au sein d'un même module lumineux 1, les LED étant choisies en fonction des besoins spécifiques en matière d'éclairage.

De manière préférentielle, la source optique est une diode électroluminescente et la description ci-dessus a été faite dans ce cadre. Une telle diode propose une bonne qualité de faisceau lumineux, tout en demeurant d'une taille réduite. Elle est donc parfaitement adaptée à un module lumineux selon l'invention, dont les dimensions doivent être limitées pour pouvoir être incorporé dans un véhicule automobile.

Le type de source utilisé dans la présente invention n'est cependant pas limité à celui d'une diode électroluminescente. La source peut également être une lampe à incandescence, une lampe à décharge, une source laser, ou tout type de source permettant de générer un faisceau ayant de propriétés similaires aux propriétés décrites ci-dessus.

Le fabricant du projecteur ne doit plus que concevoir un élément optique unique, avec des outillages de fabrication (moules par exemple) uniques, permettant de fabriquer un module optique unique compatible avec les différents types de feux faisceaux, de manière préférentiel, les feux de croisement et le feu de route.

Le module optique selon l'invention possède une géométrie compacte, et est dès lors peu encombrant.

De façon préférentielle, les rayons émis par le module en sortie de la surface de sortie du module forment une portion ou l'intégralité d'un faisceau d'éclairage de la route. De cette manière, il n'est pas utile de mettre un autre élément de déviation optique ou un cache. Autrement dit, le dispositif lumineux peut être dépourvu de lentille, de réflecteur ou de cache après la surface de sortie.

## Revendications

1. Module d'éclairage pour véhicule automobile comprenant un élément optique (7) destiné à produire au moins un premier faisceau présentant une coupure (910) au moins en partie oblique, et au moins une première source lumineuse (61),
- l'élément optique (7) comportant au moins une portion optique (16) présentant un axe optique et un foyer, la première source lumineuse (61) étant disposée au foyer et apte à émettre des premiers rayons lumineux vers l'élément optique (7) pour produire le premier faisceau
- le module comportant en outre une deuxième source lumineuse (62), la deuxième source lumineuse (62) étant disposée à distance du foyer et décalée vers le bas par rapport à la première source lumineuse (61) selon un axe vertical (50), la deuxième source lumineuse (62) étant apte à émettre des deuxièmes rayons lumineux vers la portion optique (16) de l'élément optique (7) pour produire un deuxième faisceau éclairant au moins partiellement au-dessus de la coupure,
- la première source lumineuse (61) présentant une zone d'émission de lumière comprenant un bord, ce bord étant disposé au foyer de la portion optique (16) de l'élément optique (7),
- la première source lumineuse (61) étant orientée vis-à-vis de l'élément optique (7) de sorte à ce que ledit bord soit un bord oblique qui produit la coupure (910),
- la portion optique (16) étant une lentille,
**caractérisé en ce que** le premier faisceau est destiné à faire partie d'un faisceau de type croisement et dans lequel l'élément optique (7) comporte au moins une seconde portion optique (17, 18, 19, 20) présentant un axe optique, un foyer et une troisième source lumineuse disposée au voisinage du foyer de la seconde portion optique (17, 18, 19, 20) pour produire au moins un deuxième faisceau faisant partie dudit faisceau de type croisement.

2. Module d'éclairage selon la revendication 1, dans lequel la seconde source lumineuse (62) est décalée par rapport à la première source lumineuse (61) selon un axe transversal (51)..

3. Module d'éclairage selon l'une quelconque des revendications précédentes, dans laquelle la deuxième source lumineuse est orientée vis-à-vis de l'élément optique de façon identique à l'orientation de la première source lumineuse vis-à-vis de l'élément optique.

4. Module d'éclairage selon l'une quelconque des revendications précédentes, dans lequel un faisceau de type croisement, comportant le premier faisceau, est généré lorsque la première source lumineuse (61) est allumée, la seconde source lumineuse (62) étant éteinte.

5. Module d'éclairage selon l'une quelconque des revendications précédentes, dans lequel un faisceau de type route, comportant une superposition et/ou une juxtaposition des premier et deuxième faisceau, est généré lorsque les première source lumineuse (61) et seconde source lumineuse (62) sont allumées.

6. Module d'éclairage selon l'une des revendications précédentes, dans lequel un faisceau de type diurne est généré, lorsque la deuxième source lumineuse est allumée tout en étant alimentée à l'aide d'une puissance électrique inférieure à celle nécessaire pour générer le deuxième faisceau, la première source lumineuse étant éteinte.

7. Module d'éclairage selon l'une quelconque des revendications précédentes, dans lequel la distance entre les deux sources lumineuses (61, 62) est inférieure ou égale à une fraction de la distance focale de la portion optique.

8. Module d'éclairage selon l'une quelconque des revendications précédentes, dans lequel la première (61) et la seconde (62) sources lumineuses sont constituées chacune d'une puce semi-conductrice émettrice de lumière activable sélectivement.

9. Module d'éclairage selon la revendication précédente, dans lequel la première (61) et la seconde (62) sources sont formées par une même diode électroluminescente de type bipuce.

10. Module d'éclairage selon l'une quelconque des revendications 1 à 7, dans lequel la première (61) et la seconde (62) sources lumineuses sont formées par une matrice de diodes comportant au moins deux diodes formant chacune l'une des sources lumineuses.

11. Module d'éclairage selon l'une quelconque des revendications précédentes, dans lequel le matériau de la portion optique (16) est du PVC, du verre, du polycarbonate ou du PMMA.

## Patentansprüche

1. Beleuchtungsmodul für ein Kraftfahrzeug, das ein optisches Element (7), das dazu bestimmt ist, mindestens ein erstes Bündel, das eine mindestens teilweise schräge Hell-Dunkel-Grenze (910) aufweist, zu erzeugen, und mindestens eine erste Lichtquelle (61) beinhaltet,
- wobei das optische Element (7) mindestens einen optischen Abschnitt (16) umfasst, der eine optische Achse und einen Brennpunkt aufweist, wobei die erste Lichtquelle (61) im Brennpunkt angeordnet ist und dazu fähig ist, erste Lichtstrahlen zu dem optischen Element (7) zu emittieren, um das erste Bündel zu erzeugen,
- wobei das Modul ferner eine zweite Lichtquelle (62) umfasst, wobei die zweite Lichtquelle (62) mit Abstand zu dem Brennpunkt angeordnet ist und mit Bezug auf die erste Lichtquelle (61) gemäß einer vertikalen Achse (50) nach unten hin versetzt ist, wobei die zweite Lichtquelle (62) dazu fähig ist, zweite Lichtstrahlen zu dem optischen Abschnitt (16) des optischen Elements (7) zu emittieren, um ein zweites Bündel, das mindestens teilweise oberhalb der Hell-Dunkel-Grenze beleuchtet, zu erzeugen,
- wobei die erste Lichtquelle (61) einen Lichtemissionsbereich aufweist, der einen Rand beinhaltet, wobei dieser Rand im Brennpunkt des optischen Abschnitts (16) des optischen Elements (7) angeordnet ist,
- wobei die erste Lichtquelle (61) so zu dem optischen Element (7) ausgerichtet ist, dass der Rand ein schräger Rand ist, der die Hell-Dunkel-Grenze (910) erzeugt,
- wobei der optische Abschnitt (16) eine Linse ist, **dadurch gekennzeichnet, dass** das erste Bündel dazu bestimmt ist, Teil eines Bündels vom Typ Abblendlicht zu sein, und wobei das optische Element (7) mindestens einen zweiten optischen Abschnitt (17, 18, 19, 20) umfasst, der eine optische Achse, einen Brennpunkt und eine dritte Lichtquelle, die zu dem Brennpunkt des zweiten optischen Abschnitts (17, 18, 19, 20) benachbart angeordnet ist, aufweist, um mindestens ein zweites Bündel zu erzeugen, das Teil des Bündels vom Typ Abblendlicht ist.

2. Beleuchtungsmodul nach Anspruch 1, wobei die zweite Lichtquelle (62) mit Bezug auf die erste Lichtquelle (61) gemäß einer Querachse (51) versetzt ist.

3. Beleuchtungsmodul nach einem der vorhergehenden Ansprüche, wobei die zweite Lichtquelle identisch zu der Ausrichtung der ersten Lichtquelle zu dem optischen Element zu dem optischen Element ausgerichtet ist.

4. Beleuchtungsmodul nach einem der vorhergehenden Ansprüche, wobei ein Bündel vom Typ Abblendlicht, das das erste Bündel umfasst, generiert wird, wenn die erste Lichtquelle (61) eingeschaltet ist, während die zweite Lichtquelle (62) ausgeschaltet ist.

5. Beleuchtungsmodul nach einem der vorhergehenden Ansprüche, wobei ein Bündel vom Typ Fernlicht, das eine Überlagerung und/oder eine Nebeneinanderstellung des ersten und zweiten Bündels umfasst, generiert wird, wenn die erste Lichtquelle (61) und die zweite Lichtquelle (62) eingeschaltet sind.

6. Beleuchtungsmodul nach einem der vorhergehenden Ansprüche, wobei ein Bündel vom Typ Tagfahrlicht generiert wird, wenn die zweite Lichtquelle eingeschaltet ist und dabei mit einer elektrischen Leistung versorgt wird, die kleiner ist als diejenige, die erforderlich ist, um das zweite Bündel zu generieren, während die erste Lichtquelle ausgeschaltet ist.

7. Beleuchtungsmodul nach einem der vorhergehenden Ansprüche, wobei der Abstand zwischen den zwei Lichtquellen (61, 62) kleiner als oder gleich einem Bruchteil der Brennweite des optischen Abschnitts ist.

8. Beleuchtungsmodul nach einem der vorhergehenden Ansprüche, wobei die erste (61) und die zweite (62) Lichtquelle jeweils aus einem Licht emittierenden Halbleiterchip bestehen, der selektiv aktivierbar ist.

9. Beleuchtungsmodul nach dem vorhergehenden Anspruch, wobei die erste (61) und die zweite (62) Quelle durch eine gleiche Elektrolumineszenzdiode vom Typ Doppelchip gebildet sind.

10. Beleuchtungsmodul nach einem der Ansprüche 1 bis 7, wobei die erste (61) und die zweite (62) Lichtquelle durch eine Diodenmatrix gebildet sind, die mindestens zwei Dioden umfasst, die jeweils eine der Lichtquellen bilden.

11. Beleuchtungsmodul nach einem der vorhergehenden Ansprüche, wobei das Material des optischen Abschnitts (16) PVC, Glas, Polycarbonat oder PMMA ist.

## Claims

1. Lighting module for a motor vehicle, comprising an optical element (7) intended to produce at least one first beam exhibiting an at least partly oblique cut-off (910), and at least one first light source (61),
- the optical element (7) comprising at least one optical portion (16) having an optical axis and a focus, the first light source (61) being arranged at the focus and suitable for emitting first light rays toward the optical element (7) to produce the first beam,
- the module further comprising a second light source (62), the second light source (62) being arranged at a distance from the focus and offset downward relative to the first light source (61) on a vertical axis (50), the second light source (62) being suitable for emitting second light rays toward the optical portion (16) of the optical element (7) to produce a second beam at least partially lighting above the cut-off,
- the first light source (61) exhibiting a light emission zone comprising an edge, this edge being arranged at the focus of the optical portion (16) of the optical element (7),
- the first light source (61) being oriented facing the optical element (7) such that said edge is an oblique edge which forms the cut-off (910),
- the optical portion (16) being a lens,
**characterized in that** the first beam is intended to form part of a low-type beam and in which the optical element (7) comprises at least one second optical portion (17, 18, 19, 20) having an optical axis, a focus and a third light source arranged in the vicinity of the focus of the second optical portion (17, 18, 19, 20) to produce at least one second beam forming part of said low-type beam.

2. Lighting module according to Claim 1, in which the second light source (62) is offset relative to the first light source (61) on a transverse axis (51).

3. Lighting module according to any one of the preceding claims, in which the second light source is oriented facing the optical element identically to the orientation of the first light source facing the optical element.

4. Lighting module according to any one of the preceding claims, in which a low-type beam, comprising the first beam, is generated when the first light source (61) is switched on, the second light source (62) being switched off.

5. Lighting module according to any one of the preceding claims, in which a high-type beam, comprising a superpositioning and/or a juxtapositioning of the first and second beams, is generated when the first light source (61) and second light source (62) are switched on.

6. Lighting module according to one of the preceding claims, in which a beam of daytime running light type is generated when the second light source is switched on while being powered using an electrical power lower than that needed to generate the second beam, the first light source being switched off.

7. Lighting module according to any one of the preceding claims, in which the distance between the two light sources (61, 62) is less than or equal to a fraction of the focal distance of the optical portion.

8. Lighting module according to any one of the preceding claims, in which the first (61) and the second (62) light sources each consist of a semiconductive light-emitting chip that can be selectively activated.

9. Lighting module according to the preceding claim, in which the first (61) and the second (62) sources are formed by a same light-emitting diode of dual-chip type.

10. Lighting module according to any one of Claims 1 to 7, in which the first (61) and the second (62) light sources are formed by a matrix of diodes comprising at least two diodes each forming one of the light sources.

11. Lighting module according to any one of the preceding claims, in which the material of the optical portion (16) is PVC, glass, polycarbonate or PMMA.
